# EUROPEAN PATENT SPECIFICATION

(11) **EP 0 624 817 B1**
(45) Date of publication and mention of the grant of the patent: **09.09.1998**
(21) Application number: 94303275.5
(22) Date of filing: 06.05.1994
(51) Int. Cl.: G03B 17/30, G03C 3/00

(54) **Film cartridge and method of producing a film cartridge comprising light-lock fabrics**
Filmkassette und Verfahren zur Herstellung einer Filmkassette mit Gewebestücken als Lichtdichtungsstreifen
Cassette de film et méthode de production d'une cassette appropriée pourvue d'une matière textile étanche à la lumière

(30) Priority: 10.05.1993 US 58329; 28.01.1994 US 188230; 29.04.1994 US 235532; 29.04.1994 US 235538
(43) Date of publication of application: 17.11.1994
(73) Proprietor: MILLIKEN RESEARCH CORPORATION, Spartanburg, South Carolina 29303 (US)
(72) Inventor: Holland, Ronald Bland, Greenwood, SC 29646 (US); Russum, Leonard Adams, Abbeville, SC 29620 (US); Cobb, Thomas Banks, Greenwood, SC 29646 (US)
(74) Representative: Pacitti, Pierpaolo A.M.E.

(56) References cited:
- EP-A- 0 217 227
- EP-A- 0 452 900
- EP-A- 0 466 192
- DE-A- 3 346 495

## Description

### Technical Field

The invention relates to containers for light-sensitive strip or sheet materials. More particularly, the invention is concerned with such containers having an elongated opening through which the strip or sheet material may be withdrawn, with a strip of light-locking material on each side of the opening for preventing visible light from entering the container. The invention also relates to a method for making a light-lock material for such containers.

### Background Art

Containers for light-sensitive strip or sheet materials, especially those for photographic films and papers, may be classified into two groups; that is, those for sheet film or paper and those for roll or scroll film or paper. Such containers commonly comprise an elongated opening or slit through which the strip or sheet material is withdrawn from or returned to the container. To prevent visible light from entering the container and prematurely exposing the light-sensitive material, light-locking or light-shielding members long have been provided on either side of the opening, between which the material is drawn.

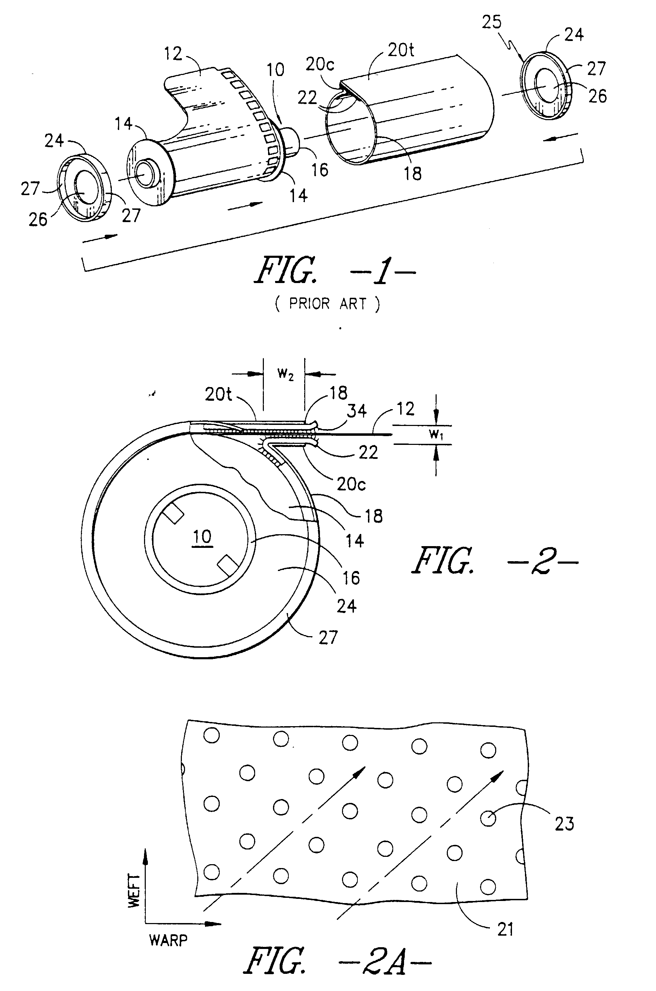

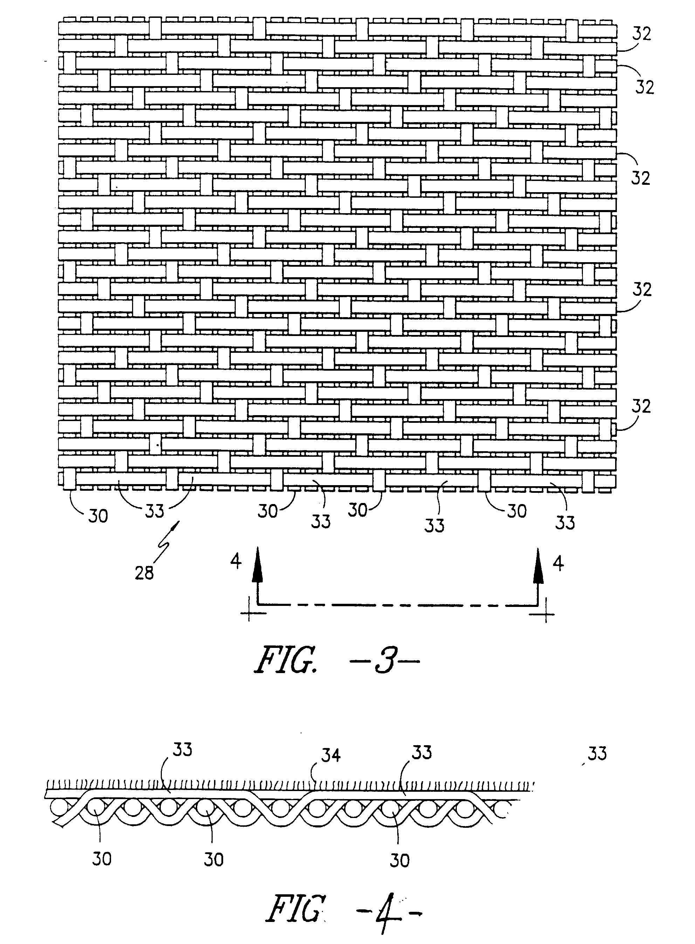

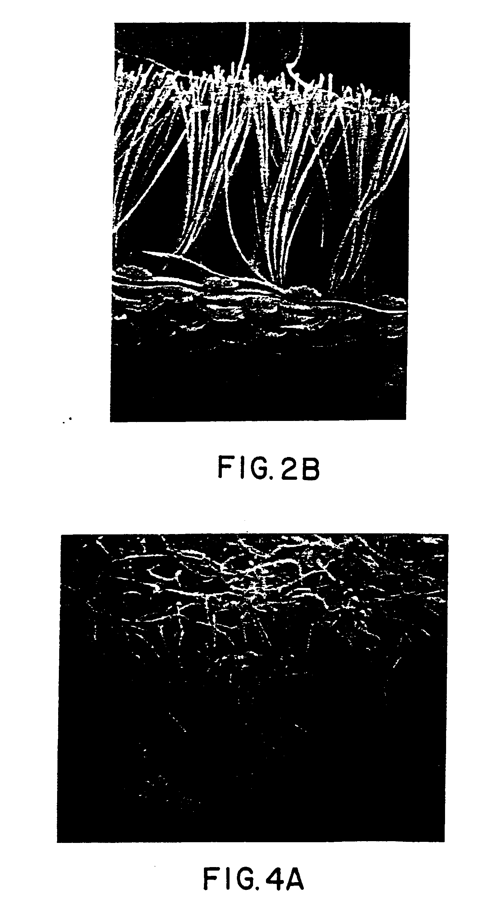

Figures 1 and 2 illustrate one known type of photographic film container which includes such light-locking members. A spool 10 comprises a central core, not illustrated, on which is wound a strip 12 of photographic film. Spool 10 includes a pair of end flanges 14 from which extend hollow axial hubs 16. A preformed metal shell 18 comprises a pair of axially extending lips 20c, 20t between which an elongated opening or slit is defined in the completed container, through which strip 12 is withdrawn from or wound back into the container in use by the consumer. These axially extending lips are different in geometry, as shown in Figure 2, lip 20c being folded or crimped back on itself and lip 20t being essentially tangent to the cylindrical preformed shell 18. Typically, preformed shell 18 has been formed from a substantially flat rectangular blank, not illustrated, on which lips 20c, 20t previously have been formed. To prevent leakage of light into the container, the opposed inner faces of lips 20c, 20t are covered in the familiar manner with by strips 22 of light-locking material such as woven or knit black velvet which gently but firmly engages the surfaces of the film and prevents light leakage into the container. Such light locking materials have been made from various fabrics and are sometimes called teremp cloths. The fabrics typically have been dyed black to improve their imperviousness to visible light and have been made fairly soft or flexible so as not to scratch or otherwise damage the film when it is withdrawn from or rewound into the container. One common type of light locking material is woven or knit cut velvet. The ends of the magazine are closed by a pair of annular end caps 24, each having an aperture 26 for rotatably receiving a hub 16 and a circumferentially extending groove 25 and flange 27 for fixedly engaging the end edges of preformed shell 18.

Such containers are assembled by inserting a prewound spool of film axially into preformed shell 18 and then applying and staking end caps 24. As shown in Figure 2, when the caps are applied, strips 22 are compressed against the lead portion of the film so that the light-locking material of strips 22 is compressed to establish a certain slot gap or width *w1* between the opposed inner faces of lips 20c, 20t. The area of compressed contact between strips 22 has a width *w2* in the direction of withdrawing the film. On the outside surface of caps 24, the walls of groove 25 define axially and peripherally extending flange 27 whose radially inner surface is deformed outwardly to stake the end cap to shell 18. In order to fit end caps 24 onto shell 18, strips 22 of light-locking material must be compressed together during assembly to less than half of width *w1* by clamping from the outside, in order to close shell 18 sufficiently for installation of the caps.

While such light-locking materials have been used for many years in the photographic industry, several vexing, chronic problems have been encountered. For example, the commonly used cut velvet material comprises rows of upstanding tufts of cut fibers. The tufts are staggered, looking in the weft direction, which helps to block light from that direction. Such cut velvets typically have been made by weaving pile yarns between a pair of woven or knit base cloths and then cutting the pile yarns between the base cloths to produce two webs of cut pile velvet. This velvet then has been sheared to a desired pile height and napped to fluff the cut yarns from their ends down toward the base cloth and produce a more dense pile. This napping has been done with extreme care since too little fluffing will produce a velvet with poor compressibility and high pull force in the container, while too much fluffing will produce a velvet with poor resiliency. Though considerable effort has been made to finish such cut velvets from the top ends of the piles down to the base cloth, in some cut velvets of this type, visible light can pass diagonally, along paths with components in the warp and weft directions, between the rows of tufts near the base cloth of the material and into the container, thus exposing a portion of the lead end of the film strip. See Figure 2A for a schematic illustration of a base cloth 21 having tufts 23 staggered in the weft direction with the diagonal light leakage paths indicated by the arrows. Passage of light along such diagonal leakage paths is sometimes called "corn-rowing". The diagonal paths may be at 30 to 45° to the weft direction of the base cloth, even in materials whose staggered tufts stop leakage in the weft direction. Such leakage is particularly troublesome when modern, highly sensitive films are used which can be exposed by quite small levels of light.

During slitting and cross-cutting of the known light-locking material to form strips of widths and lengths appropriate for installation on lips 20c, 20t, a considerable quantity of dirt has been generated in the form of fiber particles which are difficult to collect and may find their way onto the film in locations to produce flaws in a developed image. During assembly of the container, if the compression strength or compressibility of the light-locking material is too high, achieving adequate compression for installation of the end caps can result in undesired, permanent deformation of the shell which may make it interfere with the installation of the cap. Some velvets are of sufficiently low resiliency that following compression they do not spring back readily to a thickness sufficient to provide good light-locking. For example, the container of Figure 1 typically is shipped in a package in which a lead portion of strip 12 extends outside the container and is wrapped back across lip 20c and partially around the container. This wrapping back of the lead portion tends to compress slightly the light-locking material on lip 20c. If the material has low resiliency, light leakage may occur when the lead portion is straightened in a lighted area prior to installation in a camera. Some cut velvets tend to be rather directional in their properties, due to the manner in which the materials are made. Thus, film moving out of the container may encounter a different resistance or pull force from the material of strips 22 than film moving into the container. This can be particularly troublesome with self-winding cameras where low pull force is desired in both directions. Finally, cut velvet light-locking materials tend to be quite expensive.

Examples of knitted teremp cloths and containers for a roll of light-sensitive strip material are disclosed in EP0217227A and EP0452900A.

### Summary of the Invention

An object of the invention is to provide a container for light-sensitive material as defined in claim 1, the container having an improved light-locking material.

Another object of the invention is to provide a simple, reliable method for making such a light-locking material at low cost as defined in claim 11.

A further object of the invention is to provide such a container in which the light-locking material permits minimal light leakage.

Another object of the invention is to provide such a container in which the light-locking material has a sufficient pile density for good light-locking characteristics and yet not produce an increased quantity of loose fiber particles relative to known cut velvet material.

Still another object of the invention is to provide such a container in which the light-locking material exhibits an improved degree of compressibility.

Yet another object of the invention is to provide such a container in which the light-locking material exhibits an improved degree of resiliency.

A still further object of the invention is to provide such a container in which the properties of the light-locking material are more uniform with direction of movement of the light-sensitive material into or out of the container.

These objects are given only by way of illustrative examples; thus other desirable objects and advantages inherently achieved by the disclosed invention may occur or become apparent to those skilled in the art.

The scope of the invention is defined by the claims. A container for enclosing a strip or sheet of light sensitive material includes an elongated opening from the container for withdrawing the strip or sheet material, the opening having a pair of opposed inner faces; and a strip of light-locking material attached to each of the inner faces. In accordance with the invention, the light-locking material is a woven, napped and sheared fabric having floats and fibers of the floats raised from the base cloth to form a pile to prevent light from entering the container and exposing the light sensitive material. Napping such a fabric to pull up the floats and fibers from the base cloth produces a dense pile from the base cloth outward, which is superior to the prior art velvets which have been fluffed from the ends of the cut piles toward the base cloth. The light-locking material may be multiple shaft filling face satin weave fabric. A six shaft fabric is effective. The warp yarns of the fabric may be substantially 100% polyester and may be solution dyed. The fabric may comprise weft yarns of spun, staple length yarn. Also a warp faced satin weave could be used, if desired.

The opening of the container has a gap or width between the inner faces and the light-locking material requires a peak compression force in the range of 7.35 x 10⁴ to 55.1 x 10⁴ n/m² (10.67 to 80 lbs/in²) to compress an area of the light-locking material comparable in size to an area of contact between the strips attached to the inner faces, until the area has a compressed thickness of at most one half of the width between the inner faces. Preferably, the compressed thickness is in the range of 35 to 45% of the width of the opening. Materials with this degree of compressibility can be compressed during assembly of the container without causing undesired deformation of the shell of the container.

The strips of light-locking material are compressed into contact in an area with a first width in a direction of withdrawing the light-sensitive material; the opening has a second gap or width between the opposed inner faces; and the light locking material requires compression to half of the second width to prevent visible light from passing through the strip along a path having a component in a direction of the first width.

The strips of light-locking material are compressed into contact in an area with a first width in a direction of withdrawing the light-sensitive material; the opening has a second gap or width between the opposed inner faces; and the light-locking material, after being compressed to a thickness less than half of the second width and being held at that thickness for one hour at 160 degrees F, promptly returns to a decompressed thickness of at least half the second width, typically in less than a second, and prevents visible light from passing through the strip of light-locking material along a path having a component in a direction of the first width at the decompressed thickness. Recovery times as long as 3 to 5 seconds may be acceptable for materials to be used with less sensitive photographic films or papers.

The strips of light-locking material are compressed into contact in an area with a first width in a direction of withdrawing the light-sensitive material and the opening has a second gap or width between the opposed inner faces; and the strips of light-locking material, as compressed into contact with opposite sides of the light-sensitive material, produce a peak pull force in the range of 100 to 1000 gm (3.53 to 35.3 ounces) when the light-sensitive material is pulled 25.4 mm (1.0 inch) between the strips.

The method of the invention is useful for producing a pile fabric for use as a light locking material in a container for light-sensitive material and comprises the steps of providing a woven fabric; napping and shearing the surface of the woven fabric; taking up the napped and sheared fabric; again napping and shearing the previously napped and sheared surface of the fabric; and taking up the twice napped and sheared fabric. In one embodiment of the method, the woven fabric is napped and sheared at least three times. Preferably, during each napping and shearing step the woven fabric is napped twice and sheared twice. To minimize differences in properties with direction along the fabric, the woven fabric is provided as a web of extended length and the fabric is napped and sheared first in one direction along the length and second in the opposite direction along the length.

More generally, the method of the invention is useful for producing a pile fabric from flat-woven polyester fabric having fill yarn floats on a surface thereof and comprises the steps of providing the woven polyester fabric; napping and shearing the floats of the woven fabric by passing the fabric through a napping and shearing machine at least three times; and taking up the napped and sheared fabric. When the woven polyester fabric is provided as a web of extended length, the fabric is napped and sheared first in one direction along the length and second in the opposite direction along the length. Preferably, the napping and shearing machine has two stages of napping and two stages of shearing for each pass of the fabric and the fabric is passed through each of the stages at least three times.

The multiple napping and shearing of the woven fabric in accordance with the method of our invention provides a light-locking material or teremp cloth which exhibits improved light-locking characteristics. The base fabric is passed at least twice, preferably three times, through a napping and shearing arrangement. The napped, sheared fabric has a very dense, even pile which prevents the entry into a container for light-sensitive material of visible light which might prematurely expose the product.

Due to use of a light-locking material according to our invention, few waste pile yarns are created during manufacture of the material. Also, very few yarns come loose from the fabric when strips 22 are compressed against strip 12 at the outlet opening of the container. The fabric can be woven quickly and is easy to coat and bond to the inner faces of lips 20c, 20t. Thus, a container for light-sensitive material according to the invention can be manufactured at considerably lower cost as compared to containers using prior art light-locking materials.

### Brief Description of the Drawings

The foregoing and other objectives, features and advantages of the invention will be apparent from the following more particular description of the preferred embodiments of the invention, as illustrated in the accompanying drawings.

Figure 1 is an exploded perspective view of a known type of film container which is improved in accordance with the invention.

Figure 2 is an end view, partially broken away, of a known type of film container which includes strips of the light-locking material of Figure 3.

Figure 2A is a schematic representation of a known cut velvet showing diagonal light paths.

Figure 2B is a photomicrograph showing the structure of a known cut velvet light-locking material.

Figure 3 is a schematic view of a light-locking material produced in accordance with the invention.

Figure 4 is a view along line 44 of Figure 3.

Figure 4A is a photomicrograph showing the structure of the light-locking material of Figure 4.

Figure 5 is a schematic representation of the napping and shearing arrangement for the fabric of Figure 3 to produce the fabric of Figure 4.

Figure 6 is an enlarged side view of the napper shown in Figure 5.

Figure 7 is an enlarged side view of the shearer shown in Figure 5.

Figure 8 is a schematic view of an apparatus for measuring compressibility of the fabric of Figure 4.

Figure 9 is a schematic view of an apparatus for measuring the light locking capability of the fabric of Figure 4.

Figure 10 is a schematic view of an apparatus for measuring the resiliency of the fabric of Figure 4.

Figure 11 is a schematic view of an apparatus for measuring the force required to pull film between strips of the fabric of Figure 4.

### Description of the Preferred Embodiments

The following is a detailed description of the preferred embodiments of the invention, reference being made to the drawings in which the same reference numerals identify the same elements of structure in each of the several Figures.

Looking now to Figure 3, there is illustrated a six shaft filling face satin weave fabric 28 having warp yarns 30 and weft yarns 32. As illustrated, each weft yarn 32 comprises floats 33 which extend across a plurality of underlying warp yarns 30, five as illustrated, with the floats shifting at least two warp yarns in the weft direction on each successive row. Those skilled in the art will appreciate that other weave patterns could be used without departing from the scope of our invention. The fabric 28 after being woven is taken in wide widths from the weaving machine and successively dyed, lubricated dried, napped, sheared and heat set to produce the desired light-locking material. The pile fibers 34 are raised by napping and shearing floats 33 of fabric 28 to provide the light-locking material. After heat setting, the fabric is coated on the side opposite floats 33 and pile fibers 34 with an acrylic latex prime coat with carbon black filters to bind the fibers of the fabric. The fabric is then coated with a layer of an adhesive, such as a polyvinyl acetate heat activated adhesive. The coated fabric then is slit in the warp direction to provide ribbons having a width or widths suitable for installation on the opposed inner faces of lips 20c, 20t, with the warp direction of the fabric running axially along the lips. The fabric may be slit in any convenient manner; however, slitting ultrasonically produces clean cut edges. The ribbons are then cross-cut to provide strips 22 having an appropriate width or widths for installation on the opposed inner faces of lips 20c, 20t.

As indicated previously, the light-locking material is a woven fabric having a six shaft filling face satin weave, as shown in Figure 3. Fabric 28 is 100% polyester with a singles textured warp yarn 30 of 150 denier, 34 filaments and a two-ply twenties spun fill or weft yarn 32 of 1.5 denier of 38.1 mm (1.5 inch) staple length. More generally the light-locking material of the invention includes a base cloth of intermeshed or entangled yarns and float yarns on a surface of the base cloth, the floats being napped and sheared to raise fibers therefrom to prevent light from entering an associated container of light sensitive material. Also the filament of the yarn can have various other shapes such as a trilobal, octolobal, dog bone, etc.

If it is desired to eliminate dyeing and drying of the woven fabric prior to napping and shearing, solution dyed polyester warp and fill yarn can be employed. For example, warp yarn 30 can be singles textured, 150 denier, 33 filament black polyester and weft yarn 32 can be two-ply twenties, 1.5 denier of 50.8 mm (2.0 inch) staple length black polyester fiber. Solution dyed fabrics are less expensive to manufacture and ensure less tendency for reaction between the dyes in the light-lock material and the chemical constituents of photographic film or paper.

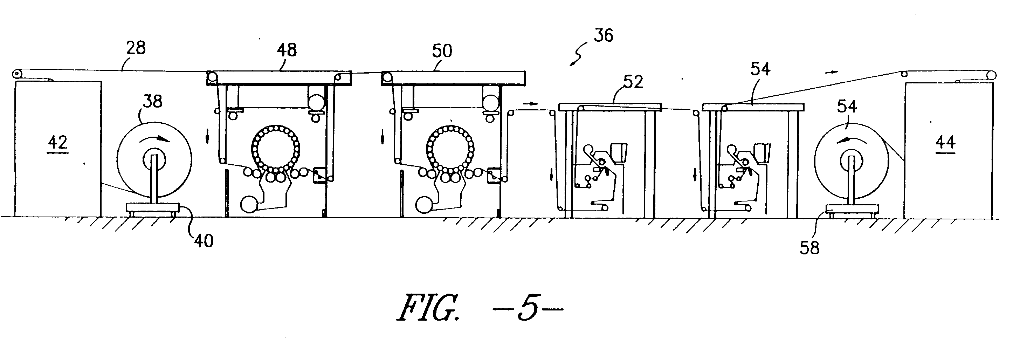

Fabric 28 is napped and sheared to produce the light-locking material shown in Figures 3 and 4, which is useful in the container of Figures 1 and 2. The method of our invention ensures that the density and height of the piles of the napped and sheared fabric will be sufficient to enable the material to perform effectively. For example, for 35mm film, a pile height of about 1.65 mm (0.065 inch) after napping, shearing and prime coating has been found to produce good light-locking characteristics. Figures 5 to 7 illustrate schematically an apparatus suitable for practicing the method of our invention to produce such a light-locking material. The woven fabric 28 is provided as a web of extended length on a take-up roll 38 which is placed in a roll stand 40 to deliver the fabric to an accumulator 42 for delivery to some downstream nappers and shearers. Accumulator 42, as well as accumulator 44 on the outlet end, accumulates fabric therein to compensate for variations in roll speed and web tension, as well as momentary stops of the machinery.

The napping and shearing arrangement 36 illustrated in Figure 5 comprises commercially available equipment and includes essentially accumulators 42, 44; nappers 48, 50; and shearers 52, 54. Fabric 28 is supplied from take-up roll 38 in sequence to accumulator 42; nappers 48, 50; shearers 52, 54; accumulator 44 and, after napping and shearing, to take-up roll 56 on roll stand 58.

It should be noted that fabric 28 on each pass through napping and shearing arrangement 46 goes through at least two nappers and then through at least two shearers. It has been found that to provide an efficient light-lock material, the fabric should be run through the napping and shearing arrangement at least twice and preferably three times to provide the proper density and height of the piles 34 and to prevent rowing or some other repeating effect on the pile 34. By "rowing" is meant the formation of extended open surface slots or rows between lines of piles, through which visible light may leak. Then, since take-up roll 56 on the outlet end of each pass is placed in the supply roll stand 40 for the next pass through napping and shearing arrangement 46, the surface of the fabric is run through the arrangement in a direction opposite to the previous run in order to equalize the effect of the counter napper rolls 60.

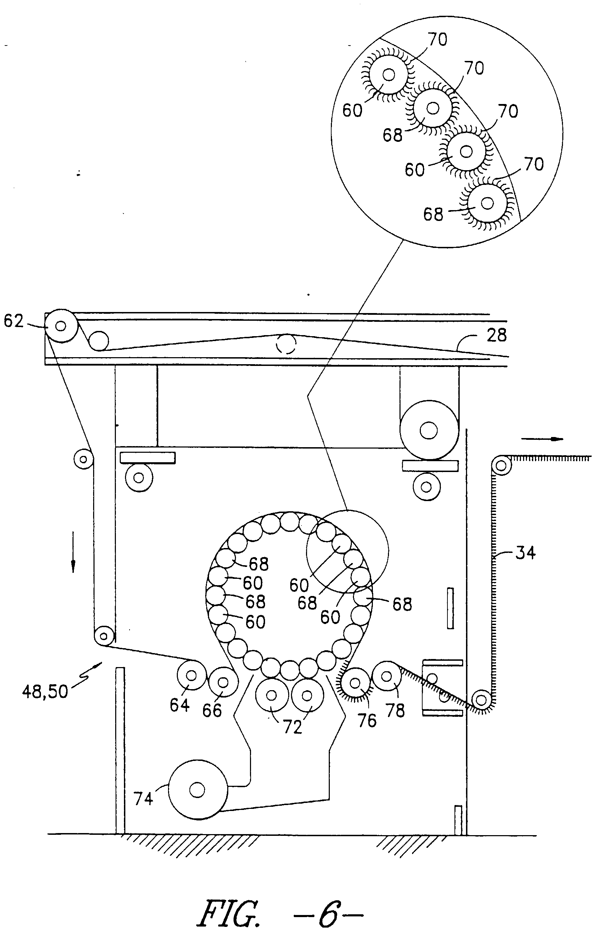

Referring now to Figures 6 and 7, the nappers and shearers are shown in more detail. Nappers 48, 50 are identical and illustrated in Figure 6; and shearers, 52, 54 are identical and illustrated in Figure 7. Both nappers and shearers are commercially available machines and do not themselves form part of our invention, other than our method of using the machines to produce the desired light-locking material.

Each napper 48, 50 receives fabric 28 from the take-up roll or the next adjacent napper with the side of the fabric with floats 33 on top; so that, the driven rolls 62, 64, 66 will place the float side adjacent the napper rolls 60, 68 in the rotating napper roll support cylinder which is rotating at a rate higher than that of the napper rolls. Napper rolls 58, 60 have curved forks or tines 70 thereon which pull the fibers and floats upwardly from the float side of the fabric to form piles 34. Raising the floats in this manner produces considerable width-wise shrinkage which improves pile density and substantially eliminates corn-rowing. Adjacent napper rolls 60, 68 have forks or tines 70 slanted in opposite directions; so that, when the oppositely driven rolls 60, 68 act on the fabric a more random pile is formed from the base cloth to the face of the fabric, which prevents light leakage from all directions as clearly shown in Figure 4A. The speed of the napper rolls is controlled to provide the desired effect on the face of the napped fabric. A pair of brush rolls 72 are mounted adjacent to the bottom of the nappers 48, 50 between the entrance and the exit for the fabric, to brush loose fibers from between the forks or tines 70. The fibers are then removed by the action of a suction cleaner 74. When the fabric 28 has been napped by the second napper 50, the driven rollers 76, 78 deliver the fabric with the pile 34 facing downward to the first shearer 52.

The passage of fabric 28 through shearer 52 is controlled essentially by driven draw rolls 80, 82 between which pile 34 is sheared by a shearing tool 84 as the fabric passes over a shearing bed 86. Mounted above shearing tool 84 is a suction cleaner 88 to vacuum up loose fiber ends cut from the tips of pile 34. The napped and sheared fabric then passes from the second shearer into accumulator 44 and then onto take-up roll 56.

Various control devices may be used to control the speed of the fabric through the napping and shearing arrangement 46, to sense the pile height to provide for adjustment, and to provide edge guides.

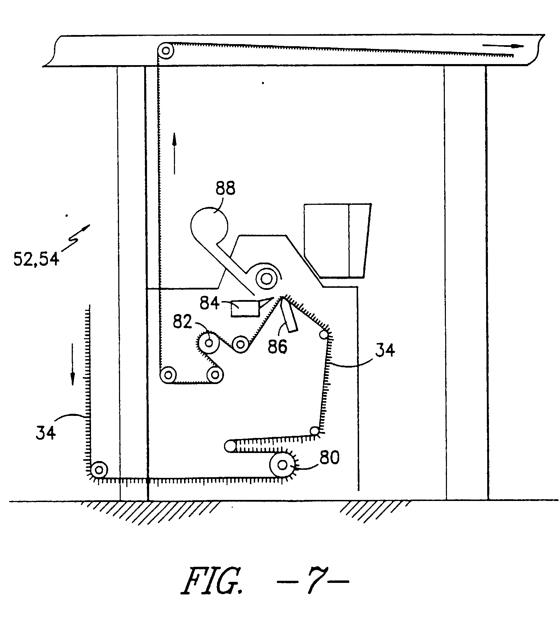

The light-locking material made in accordance with the method of the invention has a pile height and density and other characteristic properties which particularly suit it for use in containers according to the invention. To assure the adequacy of the light-locking material for use in such containers, tests have been developed to measure fabric properties such as compressibility, light-lock capability, resiliency and pull force. Apparatus for performing such tests are illustrated in Figures 8 to 11. While the description of the apparatus of Figures 8 to 11 mentions various dimensions corresponding to the container of Figures 1 and 3, those skilled in the art will appreciate that the apparatus may be readily adapted to test light-lock materials for other styles of containers for light-sensitive film and paper.

Figure 8 illustrates schematically an apparatus for measuring the compressibility of a light-locking material. Such materials must be able to compress in response to applied forces within certain limits, to enable the container to be assembled properly. Mounted on a support table 90 is a sample retaining frame 92 having a height *h1* slightly less than a test compression height for a sample of light-locking material. Above frame 92, a compression foot 94 is provided with a platen 96 having a width corresponding to width *w2* shown in Figure 2 and a length corresponding to the axial length of lips 20c, 20t. That is, the area of platen 96 corresponds to the area of light-locking material compressed between the lips when the container is assembled. For 35mm film, this area would be about 38.2 by 3.175 mm (1.5 inch by 0.125 inch). Retaining frame 92 is sized to allow platen 96 to pass into the frame opening. For example, a sample could be compressed to a thickness of at most one-half of width *w1* shown in Figure 2, which would be about the amount each strip 22 would be compressed in an assembled container. For 35mm film applications, this compressed thickness would be less than half width w1 shown in Figure 2, or less than about 0.045 inch (1.02 mm), to permit end cap installation. An actuator 98 is suitably attached to compression foot 94 and a maximum force indicator 100 measures the maximum force applied by actuator 98. To test the compressibility of a light-locking material, a sample 102 is placed within frame 92 with pile 34 facing platen 96. The sample should have an area equal to or greater than that of platen 96. Actuator 98 is operated to press platen 96 against the sample and compress the sample until the underside of platen 96 reaches a desired compression height above table 90. The maximum force is noted from indicator 100. For example, to avoid potential problems during installation of end caps 24, such maximum force preferably should be in a range of 7.35 x 10⁴ to 55.1 x 10⁴ n/m² (10.67 to 80 lbs/in²) and more preferably less than 36.7 x 10⁴ n/m² (53.33 lbs/in²). However, prior art light-locking materials required forces in a range of 7.35 x 10⁴ to 80.87 x 10⁴ n/m² (10.67 to 117.37 lbs/in²), meaning that compressing some of such materials could be expected to damage the container. For the material according to the invention, good compressibility is indicated by a peak compression force in the range of 11.03 x 10⁴ to 18.37 x 10⁴ n/m² (16 to 26.67 lbs/in²) when sample 102 is compressed to 35 to 45% of width *w1*.

Figure 9 illustrates an apparatus for measuring the light-lock capability of a light-locking material. Such material should prevent visible light from passing when installed in a container. A support table 104 is positioned above a bright light source 106 having a power, for example, of 21,520 lumens/m² (2,000 foot/candles). A slit or row of bores 108 is provided through table 104. On the opposite side of table 104 from source 106, a fixed stop plate 110 and a movable platen 112 are positioned on opposite sides of bores 108. As in the case of platen 96, the areas of plate 110 and platen 112 correspond to the area of light-locking material compressed between the lips when the container is assembled. A sample of light-locking material, having width *w2* shown in Figure 3 and a length to provide such an area, is placed between plate 110 and platen 112. A micrometer 114 is used to force movable platen 112 toward stop plate 110 until a test compression height *h2* is reached, such as a thickness of one-half of width *w1* shown in Figure 3. With a sample compressed to this extent, a human observer 116 then looks for visible light coming through the compressed sample from any angle and particularly from the direction of width *w2*. Light-locking materials according to the invention essentially prevent visible light from passing when compressed to this extent; whereas, many prior art light-locking materials allow visible light to pass at some angles.

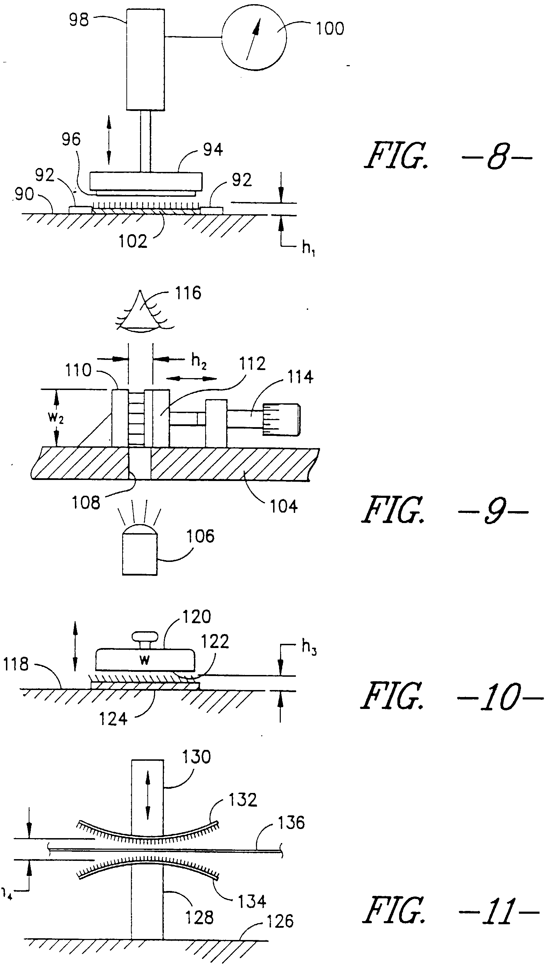

Figure 10 illustrates an apparatus for measuring the resiliency of a light-locking material. After compression, a good light-locking material should spring back to a height sufficient to ensure good light-locking. A support table 118 is positioned beneath a body 120 having a weight in the range of 80 to 100 gm (2.82 to 3.52 ounces). A contact surface 122 of body 120 has an area which corresponds to the area of light-locking material compressed between the lips when the container is assembled. A sample 124 of light-locking material is placed beneath body 120, whose weight is selected to ensure that the sample will compress to less than half width *w1* of Figure 3. With the weight applied, the sample is then held for one hour at 71.1°C (160°F). The weight is then moved away from table 118 to a distance h3, corresponding to half width *w1*. Promptly, typically in less than a second, the resiliency of an acceptable sample should cause the sample return to a decompressed thickness *h3*. Then, when tested in the manner described with reference to Figure 9, the decompressed sample should prevent visible light from passing. For less sensitive photographic films and papers, decompression times as long as 3 to 5 seconds may be acceptable.

Figure 11 illustrates an apparatus for measuring the pull force characteristic of a light-locking material. This characteristic is important, for example, to ensure that film can be easily withdrawn from and returned to the container between strips 22. A support table 126 is positioned beneath a fixed jaw 128 which, in turn, is positioned beneath movable jaw 130. Each of the opposed faces of the jaws has an area which corresponds to the area of light-locking material compressed between the lips when the container is assembled. Samples 132, 134 of light-locking materials are laid over the opposed faces of jaws 128, 130 and a sample 136 of perforated film is placed between samples 132, 134. The jaws are then closed by means not illustrated to a gap *h4*, greatly exaggerated as illustrated, which corresponds to width *w1* shown in Figure 2. Sample 136 is then pulled 25.4 mm (1.0 inch) in either direction between the jaws and the peak pull force is measured. A peak pull force in the range of 100 to 1000 gm (8.53 to 36.3 ounces) indicates an acceptable light-locking material.

While our invention has been shown and described with reference to particular embodiments thereof, those skilled in the art will understand that other variations in form and detail may be made without departing from the scope of our invention.

## Claims

1. A container for enclosing a strip or sheet of light sensitive material (12), the container including an elongated opening for withdrawing said light-sensitive material from said container, said opening having a pair of opposed inner faces (20c,20t) ; and a strip of woven light-locking material (22) attached to each of said inner faces, said woven light locking material having a pile (34) to prevent light from entering said container and exposing said light-sensitive material (12),
characterized by:
said woven light-locking material (22) being a napped and sheared fabric (28) having weft yarn floats (33) with fibers raised therefrom by napping and shearing said floats in order to form said pile.

2. The container of Claim 1, wherein said light-locking material (22) is a six shaft filling face satin weave fabric (28).

3. The container of either one of Claims 1 and 2, wherein said light-locking material (22) further comprises warp yarns (30) of substantially 100% polyester.

4. The container of Claim 3, wherein said yarns (30) are solution dyed.

5. The container of any one of Claims 1 to 4, wherein said light-locking material (22) further comprises yarns (30,32) of spun, staple length yarn.

6. The container of Claim 1, wherein said opening has a width between said opposed inner faces and said light-locking material (22) requires a peak compression force in the range of 7.35 x 10⁴ to 55.12 x 10⁴ N/m² (10.67 to 80 lbs/in²) to compress an area of said light-locking material (22) comparable in size to an area of contact between said strips (22) attached to said inner faces, until said area has a compressed thickness of at most one half of said width of said opening.

7. The container of Claim 1, wherein said compressed thickness is 35 to 45% of said width of said opening.

8. The container of Claim 1, wherein said strips of light-locking material (22) are compressed into contact in an area with a first width in a direction of withdrawing said light-sensitive material (12) and said opening has a second width between said opposed inner faces; and said light-locking material (22) requires compression to a thickness of half of said second width to prevent visible light from passing through said compressed strip along a path having a component in a direction of said first width.

9. The container of Claim 1, wherein said strips of light-locking material (22) are compressed into contact in an area with a first width in a direction of withdrawing said light-sensitive material (12) and said opening has a second width between said opposed inner faces; and said light-locking material (22), after being compressed to a thickness less than half of said second width and being held at said thickness for one hour at 71°C (160°F), promptly returns to a decompressed thickness of at least half said second width and prevents visible light from passing through said strip of light-locking material (22) along a path having a component in a direction of said first width at said decompressed thickness.

10. The container of Claim 1, wherein said strips of light-locking material (22) are compressed into contact in an area with a first width in a direction of withdrawing said light-sensitive material (12) and said opening has a second width between said opposed inner faces; and said strips of light-locking material (22), as compressed into contact with opposite sides of said light-sensitive material (12), produce a peak pull force in the range of 100 to 1000g (3.53 to 35.3 ounces) when said light-sensitive material is pulled 25.4mm (1.0 inch) between said strips.

11. A method of producing a container for light-sensitive material (12) having a pile fabric for use as a light locking material (22), comprising the steps of:
providing a woven fabric (28) having weft yarn floats (33) ;
characterised by the steps of :
napping and shearing the surface of said woven fabric (28) so as to form a pile (34) formed by fibers reised from the weft yarn floats ;
taking up the napped and sheared fabric (28); napping and shearing again the previously napped and sheared surface of said fabric (28); and taking up the twice napped and sheared fabric (28).

12. The method of Claim 11, wherein said woven fabric (28) is napped and sheared at least three times.

13. The method of either one of Claims 11 and 12, wherein in each napping and shearing step the woven fabric (28) is napped twice and sheared twice.

14. The method of any one of Claims 11 to 13, wherein said woven fabric (28) is provided as a web of extended length and the fabric (28) is napped and sheared first in one direction along said length and second in the opposite direction along said length.

15. The method of Claim 11 wherein said woven fabric is produced from woven polyester fabric (28) having weft yarn floats (33) on a surface thereof, and further comprising the steps of:
providing said woven polyester fabric (28);
napping and shearing said floats (33) of said woven fabric (28) by passing the fabric (28) through a napping and shearing machine (46) at least three times; and
taking up the napped and sheared fabric (28).

16. The method of Claim 15, wherein said woven polyester fabric (28) is provided as a web of extended length and the fabric (28) is napped and sheared first in one direction along said length and second in the opposite direction along said length.

17. The method of Claim 16, wherein said napping and shearing machine (46) has two stages of napping and two stages of shearing for each pass of said fabric (28) and said fabric (28) is passed through each of said stages at least three times.

## Patentansprüche

1. Ein Behälter zur Einschließung eines Streifens oder einer Lage lichtempfindlichen Materials (12), wobei der Behälter eine längliche Öffnung zur Entnahme des lichtempfindlichen Materials aus dem Behälter umfaßt, wobei die Öffnung ein Paar gegenüberliegenden Seiten (20c, 20t) umfaßt; und einen Streifen lichtdichten Webstoffs (22), der an den jeweiligen inneren Flächen befestigt ist, wobei der lichtdichte Webstoff einen Flor (34) aufweist, der das Eindringen von Licht in den Behälter und die Belichtung des lichtempfindlichen Materials (12) verhindert, dadurch gekennzeichnet, daß:
der lichtdichte Webstoff (22) ein gerauhter und geschorener Stoff (28) ist, der Flottierschußfäden (33) mit davon aufragenden gerauhten Fäden aufweist, wobei die Flottierfäden gerauht und geschoren wurden, um den Flor zu bilden.

2. Behälter nach Anspruch 1, wobei der lichtdichte Webstoff (22) ein sechswebeschaftiger Satinbindungswebstoff (28) mit Einschußfäden auf der Oberseite ist.

3. Behälter nach Anspruch 1 oder Anspruch 2, wobei der lichtdichte Webstoff (22) weiterhin Kettgarne (30) umfaßt, die im wesentlichen aus 100%-igem Polyester bestehen.

4. Behälter nach Anspruch 3, wobei die Garne (30) düsengefärbt sind.

5. Behälter nach einem der Ansprüche 1 bis 4, wobei der lichtdichte Webstoff (22) weiterhin Garne (30, 32) aus Spinnfasergarn umfaßt.

6. Behälter nach Anspruch 1, wobei die Öffnung eine Breite zwischen den gegenüberliegenden inneren Flächen aufweist und der lichtdichte Webstoff (22) eine Spitzenverdichtungskraft in einem Bereich von 7,35 x 10⁴ bis 55,12 x 10⁴ N/m² (10,67 bis 80 Pfund/Zoll²) benötigt, um einen Bereich des lichtdichten Webstoffs (22) zu komprimieren, der hinsichtlich der Größe mit dem Berührungsbereich zwischen den an den inneren Flächen befestigten Streifen (22) vergleichbar ist, bis der Bereich eine verdichtete Stärke von nahezu der Hälfte der Breite der Öffnung aufweist.

7. Behälter nach Anspruch 1, wobei die Verdichtungsstärke 35 bis 45% der Breite der Öffnung beträgt.

8. Behälter nach Anspruch 1, wobei die lichtdichten Webstoffstreifen (22) in einem Bereich einer ersten Breite in Richtung der Entnahme des lichtempfindlichen Materials (12) bis zur Berührung komprimiert werden, und die Öffnung eine zweite Breite zwischen den gegenüberliegenden inneren Flächen aufweist; und der lichtdichte Webstoff (22) eine Verdichtung bis zu der Hälfte der zweiten Breite benötigt, um visuelles Licht daran zu hindern, durch den komprimierten Streifen einen Weg entlang, der eine Komponente in der Richtung der ersten Breite aufweist, einzudringen.

9. Behälter nach Anspruch 1, wobei die lichtdichten Webstoffstreifen (22) in einem Bereich einer ersten Breite in Richtung der Entnahme des lichtempfindlichen Materials (12) bis zur Berührung komprimiert werden, und die Öffnung eine zweite Breite zwischen den gegenüberliegenden inneren Flächen aufweist; und der lichtdichte Webstoff (22), anschließend zu einer Stärke von weniger als der Hälfte der zweiten Breite komprimiert und bei dieser Stärke über eine Stunde bei 71°C (160°F) gehalten wurde, wieder eine dekomprimierte Stärke von mindestens der Hälfte der zweiten Breite annimmt und bei der dekomprimierten Stärke visuelles Licht daran hindert, durch den lichtdichten Webstoffstreifen (22) entlang eines Weges, der eine Komponente in der Richtung der ersten Breite aufweist, einzudringen.

10. Behälter nach Anspruch 1, wobei die lichtdichten Webstoffstreifen (22) in einem Bereich einer ersten Breite in Richtung der Entnahme des lichtempfindlichen Materials (12) bis zur Berührung verdichtet werden, und die Öffnung zwischen den gegenüberliegenden inneren Flächen eine zweite Breite aufweist; und die lichtdichten Webstoffstreifen (22), wenn sie bis zur Berührung mit den gegenüberliegenden Seiten des lichtempfindlichen Materials (12) verdichtet worden sind, eine Spitzenzugkraft in einem Bereich von 100 bis 1000g (3,53 bis 35,3 Unzen) entwickeln, wenn das lichtempfindliche Material 25,4 mm (1,0 Zoll) zwischen den Streifen gezogen wird.

11. Ein Verfahren zur Herstellung eines Behälters für lichtempfindliches Material (12), der eine Florware zur Verwendung als lichtdichtes Material (22) aufweist, welches aus den Schritten besteht: einen Webstoff (28) mit Flottierschußfäden (33) herzustellen, durch die folgenden Schritte gekennzeichnet:
die Oberfläche des Webstoffs (28) zu rauhen und zu scheren, so daß die von den Flottierschußfäden aufragenden Fasern einen Flor (34) bilden;
den gerauhten und geschorenen Webstoff (28) aufzunehmen;
Die vorher gerauhte und geschorene Oberfläche des Webstoffs (28) nochmals zu rauhen und zu scheren;
und den zweimals gerauhten und geschorenen Webstoff (28) aufzunehmen.

12. Verfahren nach Anspruch 11, wobei der Webstoff (28) mindestens dreimal gerauht und geschoren wird.

13. Verfahren nach Anspruch 11 oder Anspruch 12, wobei bei jedem Aufrauh- und Scherschritt der Webstoff (28) zweimal gerauht und zweimal geschoren wird.

14. Verfahren nach einem der Ansprüche 11 bis 13, wobei der webstoff (28) als lange, gereckte Bahn vorliegt und der Webstoff (28) erstens entlang der Längsrichtung und zweitens in der entgegengesetzten Richtung gerauht und geschoren wird.

15. Verfahren nach Anspruch 11, wobei der Webstoff aus Polyesterwebstoff (28), der Flottierschußfäden (33) auf seiner Fläche aufweist, hergestellt wird, und das weiter aus den Schritten besteht:
einen Polyesterwebstoff (28) bereitzustellen;
die Flottungen (33) des Webstoffs (28) zu rauhen und zu scheren, indem der Webstoff (28) mindestens dreimal durch eine Rauh- und Schermaschine (46) hindurchgeführt wird; und
den gerauhten und geschorenen Webstoff (28) aufzunehmen.

16. Verfahren nach Anspruch 1, wobei der Polyesterwebstoff (28) als langer, gereckter Bahn vorliegt, und der Webstoff (28) erstens entlang der Längsrichtung und zweitens in der entgegengesetzten Richtung gerauht und geschoren wird.

17. Verfahren nach Anspruch 16, wobei die Rauh- und Schermaschine (46) bei jedem Durchgang des Webstoffs (28) zwei Rauhstufen und zwei Scherstufen ausführt, und der Webstoff (28) wird den jeweiligen Stufen mindestens dreimal unterzogen wird.

## Revendications

1. Un récipient pour contenir une bande ou une feuille de matériau photosensible (12), le récipient comprenant une ouverture allongée pour retirer ledit matériau photosensible du dit récipient, ladite ouverture ayant une paire de faces internes opposées (20c, 20t); et une bande de matériau tissé hermétique à la lumière (22) fixée sur chacune des dites faces internes, ledit matériau tissé hermétique à la lumière ayant des poils (34) pour empêcher la lumière de pénétrer à l'intérieur du dit récipient et exposer ledit matériau photosensible (12), caractérisé en ce que:
ledit matériau tissé hermétique à la lumière (22) étant un tissu gratté et tondu (28) ayant des flottes de fil de trame (33) avec des fibres que l'on a fait ressortir en grattant et en tondant lesdites flottes afin de former lesdits poils.

2. Le récipient de la revendication 1, dans lequel ledit matériau hermétique à la lumière (22) est un tissu à armure satin avec une face de trame à six arbres (28).

3. Le récipient de l'une ou l'autre des revendications 1 et 2, dans lequel ledit matériau hermétique à la lumière (22) comprend de plus des fils de chaîne (30) faits considérablement en 100% polyester.

4. Le récipient de la revendication 3, dans lequel lesdits fils (30) ont été teintés dans une solution.

5. Le récipient selon l'une quelconque des revendications 1 à 4, dans lequel ledit matériau hermétique à la lumière (22) comprend de plus des fils (30, 32) de fil filé de fibres discontinues.

6. Le récipient de la revendication 1, dans lequel ladite ouverture a une largeur entre lesdites faces opposées et ledit matériau hermétique à la lumière (22) demande une force de compression de pic comprise entre 7,35 x 10⁴ et 55,12 x 10⁴ N/m² (10,67 à 80 lbs/po²) pour compresser une zone du dit matériau hermétique à la lumière (22) comparable en taille à une zone de contact entre lesdites bandes (22) fixées sur lesdites faces internes, jusqu'à ce que l'épaisseur compressée de ladite zone représente au plus la moitié de ladite largeur de ladite ouverture.

7. Le récipient de la revendication 1, dans lequel ladite épaisseur compressée représente 35 à 45 % de ladite largeur de ladite ouverture.

8. Le récipient de la revendication 1, dans lequel lesdites bandes de matériau hermétique à la lumière (22) sont compressées l'une contre l'autre dans une zone avec une première largeur dans un sens de retrait du dit matériau photosensible (12) et ladite ouverture a une seconde largeur entre lesdites faces internes opposées; et ledit matériau hermétique à la lumière (22) demande à être compressé à une épaisseur représentant la moitié de ladite seconde largeur de manière à empêcher la lumière visible de passer à travers ladite bande compressée selon un trajet ayant un composant dans une direction de ladite première épaisseur.

9. Le récipient de la revendication 1, dans lequel lesdites bandes de matériau hermétique à la lumière (22) sont compressées l'une contre l'autre dans une zone avec une première largeur dans un sens de retrait du dit matériau photosensible (12) et ladite ouverture a une seconde largeur entre lesdites faces internes opposées; et ledit matériau hermétique à la lumière (22), après avoir été compressé jusqu'à une épaisseur représentant moins de la moitié de la seconde largeur et avoir été maintenu à ladite épaisseur pendant une heure à 71°C (160°F), retourne rapidement à une épaisseur décompressée représentant au moins la moitié de ladite seconde largeur et empêche la lumière visible de passer à travers ladite bande de matériau hermétique à la lumière (22) le long d'un trajet ayant un composant dans une direction de dite première largeur à ladite épaisseur décompressée.

10. Le récipient de la revendication 1, dans lequel lesdites bandes de matériau hermétique à la lumière (22) sont compressées l'une contre l'autre dans une zone avec une première largeur dans un sens de retrait du dit matériau photosensible (12) et ladite ouverture a une seconde largeur entre lesdites faces internes opposées; et lesdites bandes de matériau hermétique à la lumière (22), lorsqu'elles sont compressées en contact avec les côtés opposés du dit matériau photosensible (12), produisent un pic de force de traction compris entre 100 et 1 000 g (entre 3,53 et 35,3 onces) lorsque ledit matériau photosensible est tiré de 25,4 mm (1,0 pouce) entre lesdites bandes.

11. Un procédé pour produire un récipient pour matériau photosensible (12) comportant un tissu à poils utilisé en tant que matériau hermétique à la lumière (22), comprenant les étapes de:
la fourniture d'un tissu tissé (28) ayant des flottes de fil de trame (33); caractérisé par les étapes suivantes:
le grattage et la tonte de la surface du dit tissu tissé (28) de manière à former un poil (34) formé par des fibres redressées à partir des flottes de fil de trame;
l'enroulement du tissu gratté et tondu (28) ;
le grattage et la tonte pour la seconde fois de la surface précédemment grattée et tondue du dit tissu (28); et
l'enroulement du tissu gratté et tondu à deux reprises (28).

12. Le procédé de la revendication 11, dans lequel ledit tissu tissé (28) est gratté et tondu au moins trois fois.

13. Le procédé de l'une ou l'autre des revendications 11 et 12, dans lequel lors de chaque étape de grattage et de tonte le tissu tissé (28) est gratté à deux reprises et tondu à deux reprises.

14. Le procédé selon l'une quelconque des revendications 11 à 13, dans lequel ledit tissu tissé (28) est fourni en tant qu'un voile de longueur étendue et le tissu (28) est gratté et tondu premièrement dans une direction dans le sens de ladite longueur et deuxièmement dans la direction opposée dans le sens de ladite longueur.

15. Le procédé de la revendication 11 dans lequel ledit tissu tissé est fabriqué à partir d'un tissu en polyester tissé (28) ayant des flottes de fil de trame (33) sur sa surface, et comprenant de plus les étapes de:
la fourniture du dit tissu en polyester tissé (28) ;
le grattage et la tonte des dites flottes (33) du dit tissu tissé (28) en faisant passer le tissu (28) dans une machine à gratter et à tondre (46) à au moins trois reprises; et
l'enroulement du tissu gratté et tondu (28).

16. Le procédé de la revendication 15, dans lequel ledit tissu en polyester tissé (28) est fourni en tant qu'un voile de longueur étendue et le tissu (28) est gratté et tondu premièrement dans une direction dans le sens de ladite longueur et deuxièmement dans la direction opposée dans le sens de ladite longueur.

17. Le procédé de la revendication 16, dans lequel ladite machine à gratter et à tondre (46) a deux étapes de grattage et deux étapes de tonte pour chacune des passes du dit tissu (28) et ledit tissu (28) passe par chacune des dites étapes au moins à trois reprises.
